**Europäisches Patentamt**

**European Patent Office**

**Office européen des brevets**

(19)

(11) Veröffentlichungsnummer: **0 040 785**
**B1**

(12)

# EUROPÄISCHE PATENTSCHRIFT

(45) Veröffentlichungstag der Patentschrift:
**18.05.83**

(21) Anmeldenummer: **81103807.4**

(22) Anmeldetag: **18.05.81**

(51) Int. Cl.³: **H 04 B 3/03,** H 04 B 1/58,
H 04 M 1/58

(54) **Übertragerfreie Gabelschaltung.**

(30) Priorität: **23.05.80 DE 3019835**

(43) Veröffentlichungstag der Anmeldung:
**02.12.81 Patentblatt 81/48**

(45) Bekanntmachung des Hinweises auf die Patenterteilung:
**18.05.83 Patentblatt 83/20**

(84) Benannte Vertragsstaaten:
**AT BE CH FR GB IT LI NL SE**

(56) Entgegenhaltungen:
**AT-B-354 529**
**DE-A-1 963 507**
**DE-A-2 159 149**
**DE-A-2 807 785**
**DE-B-1 762 849**
**US-A-4 174 470**

**NACHRICHTENTECHNISCHE ZEITSCHRIFT, 22. Jahrgang, Heft 11, November 1969, Berlin, M. TABOR «Verbesserung der Homogenität in Fernsprechnetzen durch Transistor-Gabelschaltungen», Seiten 668–671**

(73) Patentinhaber: **SIEMENS AKTIENGESELLSCHAFT,
Berlin und München Wittelsbacherplatz 2,
D-8000 München 2 (DE)**

(72) Erfinder: **Birth, Winfrid, Dipl.-Ing.,
Ostpreussenstrasse 51, D-8000 München 81 (DE)**

Übertragerfreie Gabelschaltung

Um in einem Fernmeldesystem eine Kommunikation zwischen zwei Fernmeldestellen zu ermöglichen, sind zwischen den Fernmeldestellen Übertragungseinrichtungen erforderlich, die eine hinreichend störungsfreie Signalübertragung in beiden Übertragungsrichtungen ermöglichen. Hierzu kann für jede Übertragungsrichtung eine eigene, ggf. im Multiplexbetrieb auch für eine Mehrzahl gleichzeitig bestehender Verbindungen jeweils zweier Fernmeldestellen mehrfach ausgenutzte Übertragungsleitung vorgesehen sein; ein solcher Vierdrahtbetrieb wird vorzugsweise in höheren Fernmeldenetzebenen vorgesehen sein. In unteren Fernmeldenetzebenen, insbesondere im Bereich der Teilnehmeranschlussleitungen, wird im allgemeinen eine Signalübertragung im Duplexbetrieb über Zweidrahtleitungen durchgeführt. Dabei kann die Trennung der Übertragungssignale der beiden Übertragungsrichtungen mit Hilfe einer die Zweidrahtleitung abschliessenden Gabelschaltung in Form einer Brückenschaltung bewirkt werden, die die Zweidrahtleitung beispielsweise in den vierdrähtigen Teil einer Teilnehmerendstelle (und umgekehrt) überführt. Um eine vollständige Entkopplung des von der Gabelschaltung wegführenden Empfangszweigs der Vierdrahtleitung von dem zur Gabelschaltung hinführenden Sendezweig der Vierdrahtleitung zu erzielen, muss die Brückenschaltung abgeglichen sein und dazu eine exakte Nachbildung der Eingangsimpedanz der Zweidrahtleitung enthalten. Zur Gewährleistung einer hohen Übertragungsqualität durch die Gabelschaltung ist indessen ausser der – bei Abgleich der Brückenschaltung erreichten – Entkopplung zwischen Sende- und Empfangszweig der Vierdrahtleitung auch Reflexionsfreiheit zwischen Gabelschaltung und Zweidrahtleitung erwünscht, was entsprechende zusätzliche Anforderungen an die Brückenschaltung stellt.

In diesem Zusammenhang ist (aus DE-AS 17 62 849) eine übertragerfreie Gabelschaltung in Form einer Brückenschaltung als Verbindungselement zwischen einer Zweidraht- und einer Vierdrahtleitung mit einem ankommenden und abgehenden Teil, die voneinander vollständig entkoppelt, aber jeweils mit der Zweidrahtleitung verbunden sind, bekannt, deren einer Zweig durch den Wellenwiderstand der Zweidrahtleitung, deren zweiter an den ersten angrenzender Zweig durch einen den Wellenwiderstand der Zweidrahtleitung nachbildenden komplexen Widerstand und deren dritter und vierter Zweig durch je einen ohmschen Widerstand gebildet werden und in deren Brückendiagonalen die zu entkoppelnden Teile der Vierdrahtleitung mit ihren Eingangswiderständen für den abgehenden bzw. den ankommenden Teil liegen; bei dieser bekannten Brückenschaltung ist dem abgehenden Teil der Vierdrahtleitung, beispielsweise dem Hörer einer Fernsprechteilnehmerendstelle, ein Impedanzwandler vorgeschaltet, der den Eingangswiderstand des abgehenden Teiles der Vierdrahtleitung auf einen gegenüber dem Wellenwiderstand der Teilnehmerleitung sehr kleinen Wert herabsetzt, und es ist dem ankommenden Teil der Vierdrahtleitung, beispielsweise dem Mikrofon der Fernsprechteilnehmerendstelle, ein Impedanzwandler vorgeschaltet, der den Innenwiderstand des ankommenden Teils der Vierdrahtleitung auf einen gegenüber dem Wellenwiderstand der Teilnehmerleitung sehr grossen Wert heraufsetzt.

Eine solche Brückenschaltung setzt also sowohl einen in dem einen Diagonalzweig der (abgeglichenen) Brückenschaltung liegenden Sendezweig mit einem sehr grossen, im Prinzip gegen Unendlich gehenden Innenwiderstandswert als auch einen in dem anderen Diagonalzweig der Brückenschaltung liegenden Empfangszweig mit einem sehr kleinen, im Prinzip gegen Null gehenden Eingangswiderstandswert voraus, um neben einer Entkopplung zwischen Sende- und Empfangszweig der Vierdrahtleitung auch einen reflexionsfreien Abschluss der Zweidrahtleitung zu erreichen, was eine solche Gabelschaltung in ihrer die angestrebten Widerstandswerte ohnehin allenfalls angenähert erreichenden konkreten Realisierung nicht nur als relativ aufwendig, sondern im Hinblick auf parasitäre Impedanzen, die die Einhaltung der Bedingung für Entkopplung (Brückenabgleich) und Reflexionsfreiheit (Anpassung) erschweren und ausserhalb eines relativ schmalbandigen Bereiches ggf. sogar unmöglich machen, sowie im Hinblick auf eine Überlastung der aktiven Elemente eines Impedanzwandlers zur Realisierung eines gegen Null gehenden Widerstandswerts durch ausserhalb des Nutzsignalbandes, z.B. im 50-Hz-Bereich, auftretende Störsignale auch als relativ kritisch erscheinen lässt.

Der Erfindung liegt demgegenüber die Aufgabe zugrunde, in einer übertragerfreien Gabelschaltung neben einer Entkopplung zwischen Sende- und Empfangszweig der Vierdrahtleitung einen reflexionsfreien Abschluss der Zweidrahtleitung zu erzielen, ohne neben einem einen hohen Innenwiderstandswert aufweisenden Vierdrahtleitungs-Sendezweig auch noch einen einen gegen Null gehenden Eingangswiderstandswert aufweisenden Vierdrahtleitungs-Empfangszweig voraussetzen zu müssen.

Die Erfindung betrifft eine übertragerfreie Gabelschaltung zur Verbindung einer Zweidrahtleitung mit dem einen hohen Innenwiderstandswert aufweisenden Sendezweig und dem Empfangszweig einer Vierdrahtleitung bei gleichzeitiger Entkopplung der beiden Vierdrahtleitungszweige voneinander, unter Verwendung einer den Wellenwiderstand der Zweidrahtleitung zumindest angenähert nachbildenden Zweidrahtleitungs-Abschlussimpedanz; diese übertragerfreie Gabelschaltung ist erfindungsgemäss dadurch gekennzeichnet, dass der Reihenschaltung einer Signalstromquelle, zu deren Steuereingang der Sendezweig der Vierdrahtleitung führt, und eines ersten ohmschen Widerstandes die durch die Reihenschaltung eines zweiten ohmschen Widerstandes und einer (zweckmässig mit einer RC-Schaltung zu realisierenden) weiteren Impedanz gebildete Zweidrahtleitungs-Abschlussimpedanz parallelgeschaltet ist und dass die beiden einen Klemmen der beiden ohmschen Widerstände untereinander und mit der einen Zweidrahtleitungsader zumindest wechselstrommässig direkt verbunden sind und die beiden anderen Klemmen der beiden ohmschen Widerstände über die Reihenschaltung zweier Resistanzen miteinander verbunden sind, wobei der zwischen dem Verbindungspunkt der ersteren beiden Widerstände und dem Verbindungspunkt der letzteren beiden Resistanzen angeschlossene Empfangszweig der Vierdrahtleitung mit einem einem zumindest angenähert allein dem Empfangssignalstrom proportionalen Spannungswert zwischen der Spannung, die an dem von einem Teil des nach Massgabe des im Sendezweig der Vierdrahtleitung auftretenden Sendesignals modulierten Sendesignalstroms und dem über die Zweidrahtleitung von der Gegenseite her gelieferten Empfangssignalstrom durchflossenen Widerstand der Zweidrahtleitungs-Abschlussimpedanz auftritt, und der Spannung, die an dem vom Sendesignalstrom durchflossenen Widerstand des Stromquellenzweigs auftritt, entsprechenden Empfangssignal beaufschlagt wird.

Die Erfindung bringt den Vorteil mit sich, dass in der breitbandig sowohl eine Entkopplung zwischen Sende- und Empfangszweig der Vierdrahtleitung als auch einen reflexionsfreien Abschluss der Zweidrahtleitung ermöglichenden Gabelschaltung der Eingangswiderstand des Vierdrahtleitungs-Empfangszweigs in seiner Grösse grundsätzlich frei gewählt werden kann und insbesondere keinen extrem kleinen Betrag (Null) aufweisen muss, so dass besondere Massnahmen zur Realisierung und ggf. auch zu einem Überlastungsschutz eines solchen gegen Null gehenden Eingangswiderstandes und damit verbundene Schwierigkeiten in der Realisierung bzw. Dimensionierung der Gabelschaltung vermieden werden können.

In weiterer Ausgestaltung der Erfindung kann der Widerstandswert des genannten zweiten ohmschen Widerstandes zumindest angenähert doppelt so gross wie derjenige des genannten ersten ohmschen Widerstandes sein, während die beiden genannten, gegenüber den genannten Widerständen zweckmässigerweise grossen Resistanzen untereinander von gleicher Grösse sind; hierdurch wird der Aufteilung des von der Signalstromquelle gelieferten Sendesignalstroms auf Zweidrahtleitung und Zweidrahtleitungs-Abschlussimpedanz in besonders zweckmässiger Weise Rechnung getragen.

In weiterer Ausgestaltung der Erfindung kann die Signalstromquelle von über die Zweidrahtleitung zugeführtem Speisestrom durchflossen sein, wobei zum einen Störeinflüsse durch etwa über die Zweidrahtleitung zur Gabelschaltung gelangende Überspannungen unwirksam sind und zum anderen eine vorteilhafte Realisierung der Signalstromquelle ermöglicht wird: Die Signalstromquelle kann in weiterer Ausgestaltung der Erfindung durch einen an seiner Steuerelektrode vom Sendezweig der Vierdrahtleitung her gesteuerten, in seinem Hauptstromkreis speisestromdurchflossenen Transistor gebildet sein, zweckmässigerweise durch einen Feldeffekttransistor, dessen Source-Widerstand den genannten ersten ohmschen Widerstand bildet. Der Steuerstrom des Feldeffekttransistors ist dabei so gering, dass er die Signalstromproportionalität der am Widerstand auftretenden Spannung praktisch unbeeinträchtigt lässt.

Vorteilhafterweise kann dann in weiterer Ausgestaltung der Erfindung zwischen den wechselstrommässig miteinander verbundenen Klemmen des ersten und des zweiten Widerstandes ein von über die Zweidrahtleitung zugeführtem Speisestrom durchflossenes Schaltungsglied eingefügt sein, an welchem eine örtliche Betriebsspannung abgreifbar ist, die eine Stormversorgung des beispielsweise durch den vierdrähtigen Teil einer Fernsprechteilnehmerendstelle gebildeten Vierdrahtleitungsabschnitts ermöglicht, wobei ggf. ein erst nach Übersteigen eines Sollbetriebsspannungswertes Strom aufnehmendes Schaltungsglied vorgesehen sein kann.

Der zu einer Erhaltung einer Leitungssymmetrie der Zweidrahtleitung ggf. ebenso wie der Sendezweig der Vierdrahtleitung erdfrei (ggf. über Optokoppler) an die Gabelschaltung anzuschliessende Empfangszweig der Vierdrahtleitung kann direkt zwischen dem Verbindungspunkt der genannten beiden Widerstände und dem Verbindungspunkt der genannten beiden Resistanzen angeschlossen sein; alternativ dazu kann aber auch zwischen dem Verbindungspunkt der ersteren beiden Widerstände und dem Verbindungspunkt der letzteren beiden Resistanzen der Steuerkreis eines Transistors angeschlossen sein, dessen Ausgangskreis zu dem Emfpangszweig der Vierdrahtleitung führt, oder es kann dort ein gegengekoppelter Operationsverstärker mit zum Empfangszweig der Vierdrahtleitung führendem Ausgang angeschlossen sein.

Soll zusätzlich zur Erfüllung der Forderung nach Entkopplung und Reflexionsfreiheit auch eine Echokompensation bewirkt werden, kann schliesslich in weiterer Ausgestaltung der Erfindung auch von dem Verbindungspunkt der Signalstromquelle und des genannten ersten Widerstandes zu dem Verbindungspunkt der genannten beiden Resistanzen zusätzlich ein adaptives Transversalfilter führen.

Die Gabelschaltung gemäss der Erfindung ist nicht auf eine Nachrichtenübertragung im Gleichlageverfahren beschränkt; vielmehr kann sie auch in einem Übertragungssystem mit in der Zeitlage und/oder Frequenzlage voneinander getrennten Zweidrahtleitungs-Übertragungskanälen Anwendung finden, in dem die Gabelschaltung in weiterer Ausgestaltung der Erfindung mit einem Vierdrahtleitungs-Sendezweig zum Aussenden von Sendesignalimpulsen zu bestimmten Zeitpunkten und/oder mit einem bestimmten Schwerpunkt ihres Frequenzspektrums und einem Vierdrahtleitungs-Empfangszweig zum Empfangen von Empfangssignalimpulsen zu anderen Zeitpunkten und/oder mit einem anderen Schwerpunkt ihres Frequenzspektrums verbunden ist.

Anhand der Zeichnungen sei die Erfindung noch näher erläutert. Dabei zeigt

Fig. 1 ein Prinzipschaltbild eines Zweidraht-Vierdraht-Übertragungssystems mit einer Gabelschaltung gemäss der Erfindung;

Fig. 2 zeigt schaltungstechnische Einzelheiten eines Ausführungsbeispiels einer solchen Gabelschaltung.

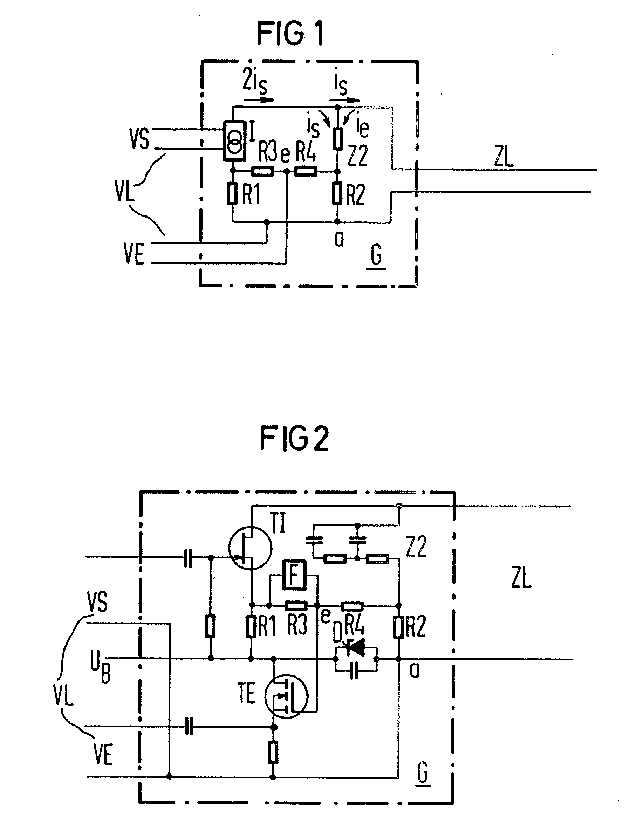

In dem in der Zeichnung Fig. 1 dargestellten Übertragungssystem, in dem sowohl Analogsignale (Sprache, Video) also auch Digitalsignale (z.B. Daten) übertragen werden können, ist zur Verbindung einer Zweidrahtleitung ZL mit einer einen Sendezweig VS und einen Empfangszweig VE aufweisenden Vierdrahtleitung VL bei gleichzeitiger Entkopplung der beiden Vierdrahtleitungszweige VS, VE voneinander eine übertragerfreie Gabelschaltung G mit einer den Wellenwiderstand der Zweidrahtleitung ZL zumindest angenähert nachbildenden Zweidrahtleitungs-Abschlussimpedanz Z2, R2 vorgesehen. Die Gabelschaltung G enthält zunächst die Reihenschaltung einer Signalstromquelle I, zu deren Steuereingang der Sendezweig VS der Vierdrahtleitung VL führt, und eines ersten ohmschen Widerstandes R1; dieser Reihenschaltung ist die durch die Reihenschaltung eines zweiten ohmschen Widerstandes R2, dessen Widerstandswert zumindest angenähert doppelt so gross wie derjenigen des ersten ohmschen Widerstandes R1 sein mag, und einer weiteren Impedanz Z2 gebildete Zweidrahtleitungs-Abschlussimpedanz parallelgeschaltet. Die beiden einen Klemmen der beiden ohmschen Widerstände R1, R2 sind untereinander und mit der einen Zweidrahtleitungsader a zumindest wechselstrommässig direkt verbunden, während die beiden anderen Klemmen der beiden ohmschen Widerstände R1, R2 über die Reihenschaltung zweier Resistanzen R3, R4 miteinander verbunden sind, wobei diese beiden Resistanzen von gleicher Grösse und zugleich gross gegenüber dem ersten Widerstand R1 und dem zweiten Widerstand R2 sein mögen. Zwischen dem Verbindungspunkt e der beiden Resistanzen R3, R4 und dem Verbindungspunkt a der beiden Widerstände R1, R2 ist der Empfangszweig VE der Vierdrahtleitung VL angeschlossen.

In der Schaltungsanordnung nach Fig. 1 teilt sich der von der vom Sendezweig VS der Vierdrahtleitung VL her gesteuerten Stromquelle I gelieferte Sendesignalstrom $2i_s$ auf die Zweidrahtleitung ZL und die Zweidrahtleitungs-Abschlussimpedanz Z2, R2 zu zumindest angenähert gleichen Teilen $i_s$ auf; zugleich fliesst durch die Zweidrahtleitungs-Abschlussimpedanz Z2, R2 der über die Zweidrahtleitung ZL von der – in Fig. 1 nicht näher dargestellten, im Prinzip ebenfalls mit einer Signalstromquelle versehenen – Gegenstelle her gelieferte Empfangssignalstrom $i_e$. Am Widerstand R2 der Zweidrahtleitungs-Abschlussimpedanz Z2+R2 tritt daher eine Spannung auf, die sich aus einem empfangssignalstromproportionalen Anteil $i_e \cdot R2$ und einem sendesignalstromproportionalen Anteil $i_s \cdot R2$ zusammensetzt. Auf der anderen Seite wird der in Serie zur Signalstromquelle I liegende ohmsche Widerstand R1 nur von dem Sendesignalstrom $2 \cdot i_s$ durchflossen, so dass hier allein eine sendestromproportionale Spannung $2 \cdot i_s \cdot R1$ auftritt. Der zwischen dem Verbindungspunkt a der beiden Widerstände R1, R2 und dem Verbindungspunkt e der beiden Resistanzen R3, R4 angeschlossene Empfangszweig VE der Vierdrahtleitung VL wird mit einem einem empfangssignalstromproportionalen Mittelwert zwischen der am Widerstand R2 der Zweidrahtleitungs-Abschlussimpedanz auftretenden Spannung und der am Widerstand R1 des Stromquellenzweiges auftretenden Spannung entsprechenden Empfangssignal beaufschlagt. Dabei ist die bei der Mittelwertbildung bewirkte gegenseitige Kompensation der an den beiden ohmschen Widerständen R1 und R2 jeweils auftretenden sendesignalstromproportionalen Spannungen nicht daran gebunden, dass, wie zuvor zunächst angenommen, der Widerstandswert des zweiten ohmschen Widerstandes R2 gerade doppelt so gross wie derjenige des ersten ohmschen Widerstandes R1 ist und dass der Widerstandswert der Resistanz R3 gerade gleich demjenigen der Resistanz R4 ist; es genügt vielmehr, dass zumindest angenähert $R2 \cdot R3 = 2 \cdot R1 \cdot R4$ ist, wobei die Widerstandswerte der Resistanzen R3 und R4 gross gegenüber den Widerstandswerten der Widerstände R1 und R2 sein sollten, so dass ein Einfluss des Empfangssignalstroms $i_e$ über die Resistanzen R3, R4 auf die Sendesignalstromquelle I zu vernachlässigen ist.

Die Parallelschaltung von Zweidrahtleitungs-Abschlussimpedanz Z2, R2 und Stromquellenzweig I, R1 kann bei gleichstromundurchlässiger Zweidrahtleitungs-Abschlussimpedanz auch als Speiseweiche für einen über die Zweidrahtleitung ZL zugeführten Speisestrom ausgenutzt werden, so dass die Signalstromquelle I von dem über die Zweidrahtleitung ZL zugeführten Speisestrom durchflossen wird. Dabei kann die Signalstromquelle I durch einen an seiner Steuerelektrode vom Sendezweig VS der Vierdrahtleitung VS her gesteuerten, speisestromdurchflossenen Transistor Tl gebildet sein, wie dies die Zeichnung Fig. 2 verdeutlicht. Als Signalstromquelle ist in der Gabelschaltung G nach Fig. 2 ein tunlichst temperaturstabiler, spannungsfester Feldeffekttransistor Tl, im Beispiel ein N-Kanal-Sperrschicht-Feldeffekttransistor vorzugsweise mit hoher Steilheit, vorgesehen, dessen Source-Widerstand den genannten ersten ohmschen Widerstand R1 mit einem Widerstandswert von beispielsweise 50 Ω bildet. Über ein mit einem Kondensator von beispielsweise 10 nF und einem Widerstand von z.B. 1 MΩ gebildetes Koppelglied kann der Feldeffekttransistor TI vom Sendezweig VS her, beispielsweise von einem Mikrofonverstärker oder einer Datenquelle, gesteuert werden, so dass der Speisestrom entsprechend moduliert und damit ein entsprechender Sendesignalstrom erzeugt wird.

Die gemäss Fig. 2 gleichstromundurchlässige Zweidrahtleitungs-Abschlussimpedanz Z2, R2 besteht aus der Reihenschaltung des genannten zweiten ohmschen Widerstandes R2 von beispielsweise 100 Ω und der zur weiteren Nachbildung des Zweidrahtleitungs-Wellenwiderstandes jeweils nach Leitungstyp erforderlichen weiteren Impedanz Z2, die vorteilhaft durch eine RC-Schaltung, ggf. durch eine RC-Kettenbruchschaltung, gebildet sein kann, wie dies auch in Fig. 2 angedeutet ist. Zwischen dem Verbindungspunkt e der beiden Resistanzen R3, R4, die jeweils einen Widerstandswert von beispielsweise 100 kΩ aufweisen mögen, und dem Schaltungspunkt a, an dem die beiden ohmschen Widerstände R1 und R2 wechselspannungsmässig direkt miteinander verbunden sind, liegt in der Gabelschaltung G gemäss Fig. 2 die Steuerstrecke eines Transistors TE, im Beispiel eines als einfacher Sourcefolger arbeitenden Verarmungs-IG-Feldeffekttransistors mit N-Kanal, an dessen Source-Widerstand über einen Kondensator das Empfangssignal für den Empfangszweig VE der Vierdrahtleitung VL abgenommen wird. Alternativ zum Transistor TE kann auch, ohne dass dies in der Zeichnung noch dargestellt ist, ein gegengekoppelter Operationsverstärker vorgesehen sein, der mit seinem invertierenden Eingang am Empfangssignalschaltungspunkt e und mit seinem anderen Eingang am Schaltungspunkt a liegt und dessen Ausgang zu dem Empangszweig VE der Vierdrahtleitung VL führt; dabei sind dann sonst etwa noch verbleibende Rückwirkungen des Empfangssignals auf den Signalstromquellentransistor TI vermieden.

Wie dies auch in Fig. 2 angedeutet ist, kann parallel zur Resistanz R3 ein adaptives Transversalfilter F vorgesehen sein, das dem Empfangssignalschaltungspunkt e zur weiteren Erhöhung der Entkopplung zwischen Sendezweig VS und Empfangszweig VE der Vierdrahtleitung VL ein Echokompensationssignal zuführt. Nachdem es [z.B. aus Frequenz 28 (1974) 5, 118 . . . 122 und 155 . . . 161] prinzipiell bekannt ist, im Empfangszweig einer Gabelschaltung auftretende, sendesignalbedingte Störsignale durch Addition bzw. Subtraktion von Kompensationssignalen zu eliminieren, braucht hier auf eine solche Echokompensation nicht näher eingegangen zu werden.

Zwischen den wechselstrommässig miteinander verbundenen Klemmen des ersten Widerstandes R1 und des zweiten Widerstandes R2 ist in den Speisestromkreis ein von dem über die Zweidrahtleitung TL zugeführten Speisestrom durchflossenes Schaltungsglied D eingefügt, an welchem eine örtliche Betriebsspannung $U_B$ (für Sende- und Empfangsschaltungen der Vierdrahtleitung und für die Gabelschaltung selbst) abgreifbar ist. Dieses Schaltungsglied ist in der Schaltungsanordnung nach Fig. 2 durch eine Zenerdiode gebildet; in Abweichung von der Darstellung in Fig. 2 kann die Zenerdiode aber auch durch eine Schaltung ersetzt sein, die nur dann Strom aufnimmt, wenn die Betriebsspannung $U_B$ einen Betriebsspannungssollwert erreicht hat.

Wie eingangs bereits erwähnt wurde, ist die Gabelschaltung gemäss der Erfindung nicht auf eine Nachrichtenübertragung im Gleichlageverfahren beschränkt, sondern kann auch in einem Übertragungssystem mit in der Zeitlage und/oder Frequenzlage voneinander getrennten Zweidrahtleitungs-Übertragungskanälen Anwendung finden: Die Gabelschaltung ist dann mit einem Vierdrahtleitungs-Sendezweig VS zum Aussenden von Sendesignalimpulsen zu bestimmten Zeitpunkten und/oder mit einem bestimmten Schwerpunkt ihres Frequenzspektrums und einem Vierdrahtleitungs-Empfangszweig VE zum Empfangen von Empfangssignalpulsen zu anderen Zeitpunkten und/oder mit einem anderen Schwerpunkt ihres Frequenzspektrums verbunden. Der Gabelschaltung kann dabei im Sendezweig VS der Vierdrahtleitung VL eine Kettenschaltung eines beispielsweise durch einen Delta-Modulator gegebenen Sprachsignal-Coders und einer Digitalsignal-Sendeschaltung zum Aussenden von Sendesignalimpulsen beispielsweise zu bestimmten Zeitpunkten vorgeschaltet sein und im Empfangszweig VE der Vierdrahtleitung VL eine Kettenschaltung einer entsprechenden Digitalsignal-Empfangsschaltung und eines ggf. durch einen Delta-Demodulator gegebenen Sprachsignal-Decoders nachgeschaltet sein. Die erwähnte Digitalsignal-Sendeschaltung kann dabei beispielsweise Pseudoternär-Halbschritt-Signalimpulse, sogenannte half-bauded AMI-(alternate-mark-inversion)Signalimpulse, abgeben, wozu sie, wie dies an anderer Stelle (DE-P 29 16 576) vorgeschlagen wird, einen Momentanwerte der Sendesignalimpulse codiert speichernden und nach Massgabe der vom Sprachsignal-Coder abgegebenen Digitalsignale angesteuerten Festwertspeicher aufweisen kann, der die entsprechenden Momentanwerte in ihrer codierten Darstellung einem Decoder zuführt, welcher daraus die entsprechenden Sendesignalimpulse bildet. Die Digitalsignal-Empfangsschaltung kann einen Regenerator enthalten, wie er prinzipiell (beispielsweise aus der Siemens-Druckschrift «PCM – Die Pulscode-Modulation und ihre Anwendung im Fernmeldewesen», Seite 15, Bild 21) bekannt ist und in dem mit Hilfe eines Taktextraktors aus den Empfangssignalimpulsen ein Empfangsbittakt abgeleitet wird, aufgrund dessen die Entscheidungszeitpunkte definiert werden, in denen in der Digitalsignal-Empfangsschaltung jeweils die Amplitudenentscheidung über den jeweiligen Zustandswert des betreffenden Bits getroffen wird; des weiteren kann die Digitalsignal-Empfangsschaltung einen beispielsweise mit einer Gleichrichterschaltung zu realisierenden Empfangssignalwandler enthalten, der die regenerierten Signale in entsprechende ΔM- bzw. PCM-Signale umformt. Der Sendebittakt kann, wie dies an anderer Stelle (DE-AS 29 21 019) vorgeschlagen wird, vom Empfangsbittakt abgeleitet und diesem gegenüber um eine halbe Bitzeitspanne phasenverschoben sein. Solche schaltungstechnischen Einzelheiten des Sendezweiges VS und Empfangszweiges VE der Vierdrahtleitung VL sind in der Zeichnung jedoch nicht mehr dargestellt und brauchen hier auch nicht weiter verfolgt zu werden, da dies zum Verständnis der Erfindung nicht erforderlich ist.

**Patentansprüche**

1. Übertragerfreie Gabelschaltung zur Verbindung einer Zweidrahtleitung mit dem einen hohen Innenwiderstandswert aufweisenden Sendezweig (VS) und dem Empfangszweig (VE) einer Vierdrahtleitung (VL) bei gleichzeitiger Entkopplung der beiden Vierdrahtleitungszweige voneinander, unter Verwendung einer den Wellenwiderstand der Zweidrahtleitung (ZL) zumindest angenähert nachbildenden Zweidrahtleitungs-Abschlussimpedanz, dadurch gekennzeichnet, dass der Reihenschaltung einer Signalstromquelle (I), zu deren Steuereingang der Sendezweig (VS) der Vierdrahtleitung (VL) führt, und eines ersten ohmschen Widerstandes (R1) die durch die Reihenschaltung eines zweiten ohmschen Widerstandes (R2) und einer weiteren Impedanz (Z2) gebildete Zweidrahtleitungs-Abschlussimpedanz parallelgeschaltet ist und dass die beiden einen Klemmen der beiden ohmschen Widerstände (R1, R2) untereinander und mit der einen Zweidrahtleitungsader zumindest wechselstrommässig direkt verbunden sind und die beiden anderen Klemmen der beiden ohmschen Widerstände (R1, R2) über die Reihenschaltung zweier Resistanzen (R3, R4) miteinander verbunden sind, wobei der zwischen dem Verbindungspunkt (a) der ersteren beiden Widerstände (R1, R2) und dem Verbindungspunkt (e) der letzteren beiden Resistanzen (R3, R4) angeschlossene Empfangszweig (VE) der Vierdrahtleitung (VL) mit einem einem zumindest angenähert allein dem Empfangssignalstrom proportionalen Spannungswert zwischen der Spannung, die an dem von einem Teil ($i_e$) des nach Massgabe des im Sendezweig (VS) der Vierdrahtleitung (VL) auftretenden Sendesignals modulierten Sendesignalstroms ($2 \cdot i_s$) und dem über die Zweidrahtleitung (ZL) von der Gegenseite her gelieferten Empfangssignalstrom ($i_e$) durchflossenen Widerstand (R2) der Zweidrahtleitungs-Abschlussimpedanz (R2, Z2) auftritt, und der Spannung, die an dem vom Sendesignalstrom ($2 \cdot i_s$) durchflossenen Widerstand (R1) des Stromquellenzweigs (I, R1) auftritt, entsprechenden Empfangssignal beaufschlagt wird.

2. Gabelschaltung nach Anspruch 1, dadurch gekennzeichnet, dass der Widerstandswert des genannten zweiten ohmschen Widerstandes (R2) zumindest angenähert doppelt so gross wie derjenige des genannten ersten ohmschen Widerstandes (R1) ist und die beiden Resistanzen (R3, R4) untereinander von gleicher Grösse sind.

3. Gabelschaltung nach Anspruch 1 oder 2, dadurch gekennzeichnet, dass die beiden Resistanzen (R3, R4) gross gegenüber dem ersten und zweiten Widerstand (R1, R2) sind.

4. Gabelschaltung nach einem der Ansprüche 1 bis 3, dadurch gekennzeichnet, dass die genannte weitere Impedanz (Z2) durch eine RC-Schaltung gebildet ist.

5. Gabelschaltung nach einem der Ansprüche 1 bis 4, dadurch gekennzeichnet, dass die Signalstromquelle (I) von über die Zweidrahtleitung (ZL) zugeführtem Speisestrom durchflossen wird.

6. Gabelschaltung nach Anspruch 5, dadurch gekennzeichnet, dass die Signalstromquelle (I) durch einen an seiner Steuerelektrode vom Sendezweig (VS) der Vierdrahtleitung (VL) her gesteuerten, speisestromdurchflossenen Transistor (TI) gebildet ist.

7. Gabelschaltung nach Anspruch 6, dadurch gekennzeichnet, dass der Transistor ein Feldeffekttransistor (TI) ist, dessen Source-Widerstand (R1) den genannten ersten ohmschen Widerstand bildet.

8. Gabelschaltung nach einem der Ansprüche 5 bis 7, dadurch gekennzeichnet, dass zwischen den wechselstrommässig miteinander verbundenen Klemmen des ersten und des zweiten Widerstandes (R1, R2) ein von über die Zweidrahtleitung (ZL) zugeführtem Speisestrom durchflossenes Schaltungsglied (D) eingefügt ist, an welchem eine örtliche Betriebsspannung abgreifbar ist.

9. Gabelschaltung nach Anspruch 8, dadurch gekennzeichnet, dass ein erst nach Übersteigen eines Sollbetriebsspannungswertes Strom aufnehmendes Schaltungsglied vorgesehen ist.

10. Gabelschaltung nach einem der Ansprüche 1 bis 9, dadurch gekennzeichnet, dass zwischen dem Verbindungspunkt der ersteren beiden Widerstände (R1, R2) und dem Verbindungspunkt der beiden Resistanzen (R3, R4) der Steuerkreis eines Transistors (TE) angeschlossen ist, dessen Ausgangskreis zu dem Emfpangszweig (VE) der Vierdrahtleitung (VL) führt.

11. Gabelschaltung nach einem der Ansprüche 1 bis 9, dadurch gekennzeichnet, das zwischen dem Verbindungspunkt der ersteren beiden Widerstände (R1, R2) und dem Verbindungspunkt der beiden Resistanzen (R3, R4) eingangsseitig ein gegengekoppelter Operationsverstärker angeschlossen ist, dessen Ausgang zu dem Empfangszweig (VE) der Vierdrahtleitung (VL) führt.

12. Gabelschaltung nach einem der Ansprüche 2 bis 11, dadurch gekennzeichnet, dass von dem Verbindungspunkt der Signalstromquelle (I) und des genannten ersten Widerstandes (R1) zu dem Verbindungspunkt (e) der genannten beiden Resistanzen (R3, R4) zusätzlich ein adaptives Transversalfilter (F) führt.

13. Gabelschaltung nach einem der vorhergehenden Ansprüche, dadurch gekennzeichnet, dass sie mit einem Vierdrahtleitungs-Sendezweig (VS) zum Aussenden von Sendesignalimpulsen zu bestimmten Zeitpunkten und/oder mit einem bestimmten Schwerpunkt ihres Frequenzspektrums und einem Vierdrahtleitungs-Empfangszweig VE zum Empfangen von Empfangssignalimpulsen zu anderen Zeitpunkten und/oder mit einem anderen Schwerpunkt ihres Frequenzspektrums verbunden ist.

## Claims

1. Transmitter-free hybrid circuit for connecting a two-wire line to the transmitting branch (VS) which possesses a high internal resistance value, and to the receiving branch (VE) of a four-wire line (VL) while simultaneously decoupling the two four-wire line branches from one another, employing a two-wire line terminating impedance which at least approximately simulates the surge impedance of the two-wire line (ZL), characterised in that the series connection of a signal current source (I), to whose control input leads the transmitting branch (VS) of the four-wire line (VL), and of a first ohmic resistor (R1) is connected in parallel to the two-wire line terminating impedance which is formed by the series connection of a second ohmic resistor (R2) and a further impedance (Z2), and that the one terminals of the two ohmic resistors (R1, R2) are both directly connected, at least in respect of alternating current, to one another and to the one two-wire line wire and the two other terminals of the two ohmic resistors (R1, R2) are connected to one another by means of the series connection of two resistances (R3, R4), where the receiving branch (VE) of the four-wire line (VL), which is connected between the junction point (a) of the first two resistors (R1, R2) and the junction point (e) of the last two resistances (R3, R4), is fed with a receiving signal which corresponds to a voltage value, which is at least approximately proportional only to the receiving signal current, between the voltage, which occurs at the resistor (R2) of the two-wire line terminating impedance (R2, Z2) which is traversed by a part ($i_s$) of the transmitting signal current (2.$i_s$) which is modulated in accordance with the transmitting signal occurring in the transmitting branch (VS) of the four-wire line (VL) and by the receiving signal current ($i_e$) supplied from the opposite side by means of the two-wire line (ZL), and the voltage which occurs at the resistor (R1) of the current source branch (I, R1) which is traversed by the transmitting signal current (2.$i_s$).

2. Hybrid circuit as claimed in claim 1, characterised in that the resistance value of said second ohmic resistor (R2) is at least approximately twice as great as that of said first ohmic resistor (R1) and the two resistances (R3, R4) are mutually of the same magnitude.

3. Hybrid circuit as claimed in claim 1 or 2, characterised in that the two resistances (R3, R4) are large compared with the first and the second resistors (R1, R2).

4. Hybrid circuit as claimed in one of claims 1 to 3, characterised in that said further impedance (Z2) is formed by an RC-circuit.

5. Hybrid circuit as claimed in one of claims 1 to 4, characterised in that the signal current source (I) is traversed by supply current fed via the two-wire line (ZL).

6. Hybrid circuit as claimed in claim 5, characterised in that the signal current source (I) is formed by a transistor (TI) which is traversed by supply current and controlled at its control electrode from the transmitting branch (VS) of the four-wire line (VL).

7. Hybrid circuit as claimed in claim 6, characterised in that the transistor is a field-effect transistor (TI) whose source resistor (R1) forms said first ohmic resistor.

8. Hybrid circuit as claimed in one of claims 5 to 7, characterised in that between the terminals connected to one another in respect of alternating current, of the first and of the second resistor (R1, R2), there is inserted a circuit element (D) which is traversed by feed current supplied via the two-wire line (ZL) and at which a local operating voltage can be tapped.

9. Hybrid circuit as claimed in claim 8, characterised in that there is provided a circuit element which receives current only after a theoretical operating voltage value has been exceeded.

10. Hybrid circuit as claimed in one of claims 1 to 9, characterised in that the control circuit of a transistor, whose output circuit leads to the receiving branch (VE) of the four-wire line (VL), is connected between the junction point of the first two resistors (R1, R2) and the junction point of the two resistances (R3, R4).

11. Hybrid circuit as claimed in one of claims 1 to 9, characterised in that at the input end a negative feed-back operational amplifier, whose output leads to the receiving branch (VE) of the four-wire line (VL), is connected between the junction point of the first two resistors (R1, R2) and the junction point of the two resistances (R3, R4).

12. Hybrid circuit as claimed in one of claims 2 to 11, characterised in that an adaptive transversal filter (F) additionally leads from the junction point of the signal current source (I) and of said first resistor (R1) to the junction point (e) of said two resistances (R3, R4).

13. Hybrid circuit as claimed in one of the preceding claims, characterised in that it is connected to a four-wire line transmitting branch (VS) for emitting transmission signal pulses at specific times and/or with a specific centre of gravity of its frequency spectrum and a four-wire line receiving branch VE for receiving received signal pulses at other times and/or with another centre of gravity of its frequency spectrum.

## Revendications

1. Termineur sans transformateur pour relier une ligne bifilaire avec la branche d'émission (VS), qui présente une résistance interne de valeur élevée, et la branche de réception (VE) d'une ligne à quatre fils (VL), avec découplage simultané des deux branches de la ligne à quatre fils, en utilisant une impédance terminale de la ligne bifilaire qui équilibre au moins approximativement l'impédance caractéristique de la ligne bifilaire (ZL), caractérisé par le fait qu'en parallèle dans le montage série d'une source de courant de signal (I), sur la borne de commande de laquelle arrive la branche d'émission (VS) de la ligne à quatre fils (VL), et d'une première résistance ohmique (R1), est branchée l'impédance terminale de la ligne bifilaire, formée par le montage série d'une seconde résistance ohmique (R2) et d'une autre impédance (Z2), et que les premières bornes des deux résistances ohmiques (R1, R2) sont reliées directement, au moins du point de vue du courant alternatif, entre elles et à un des fils de la ligne bifilaire, et les deux autres bornes des deux résistances ohmiques (R1, R2) sont reliées entre elles par l'intermédiaire du montage série de deux résistances (R3, R4), la branche de réception (VE) de la ligne à quatre fils (VL), qui est montée entre le point de fonction (a) des deux premières résistances (R1, R2) et le point de jonction (e) des deux dernières résistances (R3, R4) recevant un signal de réception, qui correspond à une valeur de tension proportionnelle au moins approximativement uniquement au signal de réception, entre la tension qui apparaît aux bornes de la résistance (R2) de l'impédance terminale (R2, Z2) de la ligne bifilaire, qui est traversée par une partie $(i_s)$ du courant de signal d'émission $(2.i_s)$, qui est modulé en proportion du signal d'émission apparaissant dans la branche d'émission (VS) de la ligne à quatre fils (VL), et par le courant de signal de réception $(i_e)$ délivré à partir de l'autre côté, par l'intermédiaire de la ligne bifilaire (ZL), et la tension qui apparaît aux bornes de la résistance (R1) de la branche de la source de courant (I, R1) qui est traversée par le courant de signal d'émission $(2i_s)$.

2. Termineur suivant la revendication 1, caractérisé par le fait que la valeur de ladite seconde résistance ohmique (R2) est au moins le double de celle de ladite première résistance ohmique (R1), et que les deux résistances (R3, R4) sont égales entre elles.

3. Termineur suivant l'une des revendications 1 ou 2, caractérisé par le fait que les deux résistances (R3, R4) ont une valeur importante par rapport aux première et seconde résistances (R1, R2).

4. Termineur suivant l'une des revendications 1 à 3, caractérisé par le fait que ladite autre impédance (Z2) est formée par un circuit RC.

5. Termineur suivant l'une des revendications 1 à 4, caractérisé par le fait que la source de courant de signal (I) est traversée par un courant d'alimentation appliqué par l'intermédiaire de la ligne bifilaire (ZL).

6. Termineur suivant la revendication 5, caractérisé par le fait que la source de courant de signal (I) est formée par un transistor (TI) qui est traversé par le courant d'alimentation et est commandé, sur son électrode de commande, par la branche d'émission (VS) de la ligne à quatre fils (VL).

7. Termineur suivant la revendication 6, caractérisé par le fait que le transistor est un transistor à effet de champ (TI), dont la résistance de source (R1) forme ladite première résistance ohmique.

8. Termineur suivant l'une des revendications 5 à 7, caractérisé par le fait qu'entre les bornes, reliées entre elles du point de vue du courant alternatif, des première et seconde résistances ohmiques (R1, R2), est inséré un élément de circuit (D) qui est traversé par le courant d'alimentation appliqué par l'intermédiaire de la ligne bifilaire (ZL) et sur lequel peut être prélevée une tension de service.

9. Termineur suivant la revendication 8, caractérisé par le fait qu'il est prévu un élément de circuit qui ne reçoit du courant qu'après dépassement d'une valeur de consigne de la tension de service.

10. Termineur suivant l'une des revendications 1 à 9, caractérisé par le fait qu'entre le point de jonction des deux premières résistances (R1, R2) et le point de jonction de deux secondes résistances (R3, R4), est branché le cirucit de commande d'un transistor (TE) dont le circuit de sortie conduit à la branche de réception (VE) de la ligne à quatre fils (VL).

11. Termineur suivant l'une des revendications 1 à 9, caractérisé par le fait qu'entre le point de jonction de deux premières résistances (R1, R2) et le point de jonction de deux secondes résistances (R3, R4) est monté côté entrée, un amplificateur opérationnel à contre-réaction dont la sortie conduit à la branche de réception (VE) de la ligne à quatre fils (VL).

12. Termineur suivant l'une des revendications 2 à 11, caractérisé par le fait qu'un filtre transversal d'adaptation (F) est prévu en outre entre le point de jonction de la source de courant de signal (I) avec ladite première résistance (R1), et le point de jonction (e) desdites secondes résistances (R3, R4).

13. Termineur suivant l'une des revendications précédentes, caractérisé par le fait qu'il est relié avec une branche d'émission (VS) d'une ligne à quatre fils pour émettre des impulsions de signal d'émission à des instants déterminés et/ou avec un barycentre déterminé de leur spectre de fréquence, et à une branche de réception (VE) de la ligne à quatre fils pour recevoir des impulsions de signal de réception à d'autres instants et/ou avec un autre barycentre de leur spectre de fréquence.

# FIG 1

# FIG 2